# EUROPÄISCHE PATENTSCHRIFT

(11) **EP 1 923 595 B1**
(45) Veröffentlichungstag und Bekanntmachung des Hinweises auf die Patenterteilung: **16.05.2012**
(21) Anmeldenummer: 07021522.3
(22) Anmeldetag: 06.11.2007
(51) Int. Cl.: F16F 9/20, F16F 9/49, F16F 9/50

(54) **Schwingungsdämpfer mit amplitudenabhängiger Dämpfkraft**
Vibration damper with amplitude-dependent damping force
Amortisseur d'oscillations doté d'une force d'amortissement dépendant de l'amplitude

(30) Priorität: 17.11.2006 DE 102006054257
(43) Veröffentlichungstag der Anmeldung: 21.05.2008
(73) Patentinhaber: ZF Friedrichshafen AG, 88038 Friedrichshafen (DE)
(72) Erfinder: Hammer, Thomas, 97653 Bischofsheim (DE)

(56) Entgegenhaltungen:
- WO-A2-2006/044638
- US-A1- 2004 251 097
- US-A1- 2006 086 581

## Beschreibung

Die Erfindung betrifft einen Schwingungsdämpfer mit amplitudenabhängiger Dämpfkraft gemäß dem Oberbegriff von Patentanspruch 1.

Aus der WO 2006/044638 A ist ein Schwingungsdämpfer mit amplitudenabhängiger Dämpfkraft bekannt, der einen reibkraftbetätigten Ventilring aufweist, der eine radiale Verbindungsöffnung zwischen einem kolbenstangenseitigen Arbeitsraum und einem konzentrischen Arbeitsraum schaltet. Eine vergleichbare Konstruktion ist aus der DE 39 14 298 C1 bekannt.

Bei dem Schwingungsdämpfer nach der WO 2006/044638 A ist die Wirkung der amplitudenabhängigen Dämpfkraft auf einen sehr kleinen Hubbereich begrenzt. Der reibkraftabhängige Ventilring verschließt die Verbindungsöffnung außerhalb des besagten Hubbereichs sowohl bei einer Ausfahr- wie auch bei einer Einfahrbewegung der Kolbenstange. Dazu verfügt der Ventilring über eine umlaufende Schaltnut, deren Nutbreite den amplitudenabhängigen Dämpfkraftverlauf bestimmt. Bei einem größeren amplitudenabhängigen Dämpfkraftbereich benötigt dieses Bauprinzip einen sehr langen axialen Bauraum, da man den angestrebten Hubbereich als Nutbreite im Ventilring und zusätzlich als Hubweg für den Ventilring im kolbenstangenseitigen Arbeitsraum vorsehen muss, d. h. der axiale Mindestbauraum entspricht etwa dem zweifachen Hubbereich mit amplitudenabhängiger Dämpfkraft.

Die Aufgabe der vorliegenden Erfindung besteht darin, einen Schwingungsdämpfer mit amplitudenabhängiger Dämpfkraft bereitzustellen, bei dem das aus dem Stand der Technik bekannte Bauraumproblem für die amplitudenabhängige Dämpfkraftverstellung behoben ist.

Erfindungsgemäß wird die Aufgabe dadurch gelöst, dass die Anschlussöffnung mit einem Fluidenweg gekoppelt ist, der beide Arbeitsräume über eine zweite Anschlussöffnung miteinander verbindet.

Der große Vorteil besteht darin, dass der Ventilring nur noch eine einfache Schließfunktion für eine einzige Bewegungsrichtung ausführen muss. Dadurch kann der Ventilring axial deutlich kürzer gestaltet werden. Des Weiteren wird durch die Verbindung mit dem zweiten Arbeitsraum erreicht, dass insbesondere in den kolbenstangenseitigen Arbeitsraum kein Druckmedium aus einem Ausgleichsraum gelangen kann.

In weiterer vorteilhafter Ausgestaltung wird der Fluidenweg von einem den Zylinder zumindest auf einem Längenabschnitt einschließenden Hüllrohr und der Außenmantelfläche des Zylinders gebildet. Es liegt ein in sich geschlossenes Aggregat vor.

Des Weiteren ist vorgesehen, dass der Fluidenweg mit einem Rückschlagventil bestückt ist. Das Rückschlagventil bietet die Möglichkeit, dass die Strömungsrichtung im Fluidenweg so zu bestimmen, dass Dämpfventil im Kolben eine größere Dämpfkraft erzeugen können.

Dabei wird das Rückschlagventil vom Druck im kolbenstangenfernen Arbeitsraum in Schließrichtung vorgespannt.

Gemäß einem vorteilhaften Unteranspruch wird das Rückschlagventil von einem radial elastischen Federring gebildet, der die Anschlussöffnung ansteuert.

Bei einer Alternativausführung wird das Rückschlagventil von einem auf der Kolbenstange axial verschiebbaren Ventilkörper gebildet wird.

Dabei ist der Ventilkörper des Rückschlagventils in einer Nut einer Ventilhülse angeordnet, in der der Ventilring axial verschiebbar auf der Kolbenstange gelagert ist.

Letztlich liegen zwei Rückschlagventile vor. Der Ventilring bildet ein erstes Rückschlagventil und der Ventilkörper ein zweites Rückschlagventil, wobei die Rückschlagventile funktional in Reihe angeordnet sind und ein gegenläufiges Öffnungs/Schließverhalten aufweisen.

Im Hinblick auf eine Standardisierung ist der Zylinder mindestes im Bereich des Hubweges des Ventilrings im Durchmesser verkleinert. Der Zylinderdurchmesser variiert zwischen den verschiedenen Anwendungsfällen, so dass die Bauelemente für jeden Zylinderdurchmesser angepasst werden müssten. Wenn man die Bauelemente für die amplitudenselektive Dämpfwirkung auf einen vergleichsweise kleinen Durchmesserbereich auslegt, dann können diese in verschiedenen Schwingungsdämpferbaugrößen verwendet werden.

Bei einer ersten Variante ist der Zylinder einteilig und mit mindestens einem Übergang zwischen Längenabschnitten mit unterschiedlichen Durchmessern ausgeführt. Zu Sicherung der Ventilhülse im eingezogenen Bereich kann z. B. ein einfacher Sicherungsring dienen.

Alternativ ist vorgesehen, dass der Zylinder in Axialrichtung mehrteilig ausgeführt und zwischen den Längenabschnitten mit unterschiedlichem Durchmesser ein Adapterring angeordnet ist. Man kann z. B. standardmäßig einen Längenabschnitt für die Bauelemente betreffend die amplitudenselektive Dämpfkraft verwenden und diesen Längenabschnitt zusammen mit dem Adapterring wahlweise bei verschiedenen Schwingungsdämpferbaugrößen einsetzen.

Des Weiteren besteht die Möglichkeit, dass der Adapterring eine gestufte Innenkontur zur Aufnahme eines kolbenstangenseitigen Verdrängers aufweist und damit einen hydraulischen Endanschlag bildet.

Eine weitere Ausführungsform zeichnet sich dadurch aus, dass der Schwingungsdämpfer eine den Zylinder an beiden Enden durchsetzende Kolbenstange aufweist und in beiden Arbeitsräumen ein auf der Kolbenstange gleitender Ventilring angeordnet ist. Damit steht für beide Bewegungsrichtungen der Kolbenstange eine amplitudenselektive Dämpfkraft zur Verfügung. Man kann ebenfalls ein mehrteiliges Zylinderrohr verwenden, so dass ein symmetrischer Aufbau bezogen auf eine Querachse denkbar ist.

Anhand der folgenden Figurenbeschreibung soll die Erfindung näher erläutert werden.

Es zeigt:
- Fig. 1: Schwingungsdämpfer in Zweirohrausführung
- Fig. 2: Schwingungsdämpfer mit durchgehender Kolbenstange
- Fig. 3 - 4: Schwingungsdämpfer mit Rückschlagventil im kolbenstangenseitigen Arbeitsraum
- Fig. 5: Schwingungsdämpfer mit einem einteiligen Zylinder

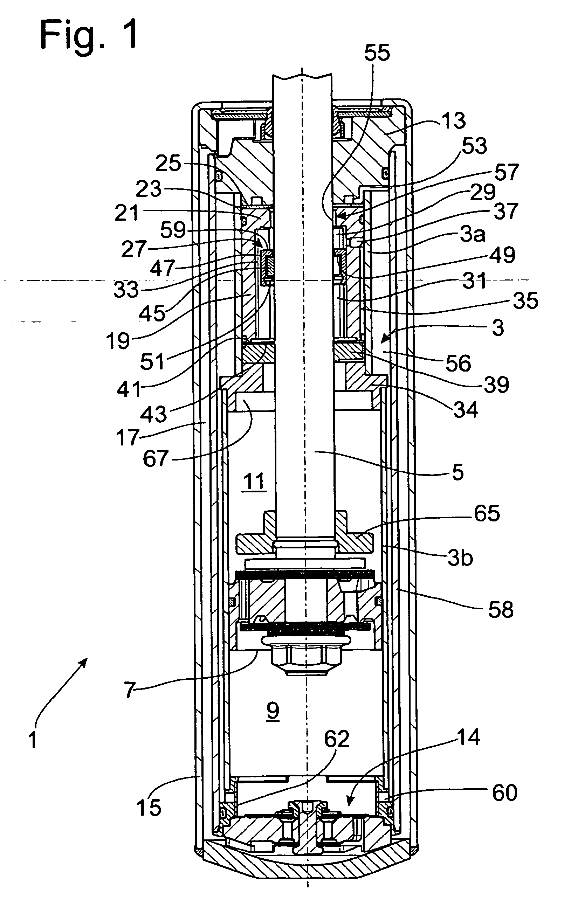

Die Figur 1 zeigt einen Schwingungsdämpfer 1, der einen Zylinder 3 aufweist, in dem eine Kolbenstange 5 mit einem Kolben 7 axial beweglich gelagert ist. Der Kolben 7 unterteilt den Zylinder 3 in einen kolbenstangenfernen und einen kolbenstangenseitigen Arbeitsraum 9; 11, wobei eine Kolbenstangenführung 13 den kolbenstangenseitigen Arbeitsraum 11 und ein Bodenventil 14 den Zylinder 3 endseitig verschließen.

Der Zylinder 3 wird von einem Behälterrohr 15 umschlossen, wobei ein dadurch bestimmter Ausgleichsraum 17 das Volumen der ein- und ausfahrenden Kolbenstange 5 kompensiert.

Im kolbenstangenseitigen Arbeitsraum 11 ist eine Ventilhülse 19 angeordnet, deren Boden 21 über eine Drosselscheibe 23 mittelbar an einer in Richtung des Arbeitsraums 11 weisenden Stirnfläche 25 der Kolbenstangenführung 13 anliegt. Innerhalb der Ventilhülse 19 ist ein Ventilring 27 auf der Mantelfläche der Kolbenstange 5 axial gleitend gelagert, so dass innerhalb der Ventilhülse zwei Arbeitskammern 29; 31 vorliegen. Zwischen den beiden Arbeitskammern 29; 31 besteht eine Strömungsverbindung 33, die z. B. von einer Längsnut in der Innenwandung der Ventilhülse 13 gebildet wird.

Die Ventilhülse 19 wird radial von der Innenwandung des Zylinders 3 geführt, der mindestens im Bereich des Hubwegs des Ventilrings, in diesem Fall auf der Gesamtlänge der Ventilhülse 19 im Durchmesser verkleinert ist. Der Zylinder 3 ist in Axialrichtung mehrteilig ausgeführt und zwischen den Längenabschnitten 3a; 3b ist ein Adapterring 34 angeordnet, der die beiden Längenabschnitte 3a; 3b zueinander zentriert und eine axiale Verspannung zwischen dem Bodenventil 14 und der Kolbenstangenführung 13 gewährleistet. Eine Außendurchmesserreduzierung der Ventilhülse 19 in der Form mindestens einer Axialnut 35 bildet einen Axialkanal zwischen dem kolbenstangenseitigen Arbeitsraum 11 und der zwischen dem Ventilring 27 und dem Boden 21 vorliegenden Arbeitskammer 29 innerhalb der Ventilhülse 19, wobei zwischen dem Axialkanal 35 und der Arbeitskammer 29 noch mindestens ein Verbindungskanal 37 besteht. Man kann auch mehrere Axialkanäle vorsehen. Die von einem Deckel 39 der Ventilhülse 19 und dem Ventilring 27 begrenzte Arbeitskammer 31 weist eine Drosselöffnung 41 zum kolbenstangenseitigen Arbeitsraum 11 auf. Die Drosselöffnung 41 wird von mindestens einer zwischen dem Deckel und der Ventilhülse angeordneten Drosselscheibe 43 gebildet.

Der Ventilring 27 verfügt über einen auf der Kolbenstange gleitenden Reibring 45 und einen den Reibring mit einer Mantelfläche außenseitig umschließenden Dichtring 47, wobei sich der Dichtring 47 radial in Grenzen zum Reibring 45 bewegen kann. Der Reibring 45 kann sich axial an einem Boden 49 des Dichtrings 47 und einem Sicherungsring 51 abstützen.

In dieser Variante der Erfindung ist im Zylinder eine Ventilöffnung 53 ausgeführt, die über die Voröffnungsscheibe 23 und einen Anschlusskanal 55 im Boden 21 der Ventilhülse 19 an die Arbeitskammern 29; 31 der Ventilhülse 19 mit einem Fluidenweg 56 gekoppelt. Der Fluidenweg ist zum Ausgleichsraum 17 abgedichtet und wird von einer Außenmantelfläche des Zylinder 3a; 3b und einem zumindest auf einem Längenabschnitt umschließenden Hüllrohr 58 gebildet. Über eine zweite Anschlussöffnung 60 knapp oberhalb des Bodenventils 14 sind damit die beiden Arbeitsräume miteinander verbunden.

Der Anschlusskanal 55 wird von einer Durchgangsöffnung 57 im Boden gebildet, durch die auch die Kolbenstange 5 verläuft, wobei der Ventilring 27 die Durchgangsöffnung 57 mit seiner oberen Stirnfläche 59 verschließt.

Bei einer Kolbenstangenbewegung in Ausfahrrichtung gleitet der Ventilring 27 innerhalb der Ventilhülse 19 aufgrund der Reibkraft zur Kolbenstange 5 synchron mit. Aus dem kolbenstangenseitigen Arbeitsraum 11 wird Dämpfmedium über den Axialkanal 35 zwischen der Ventilhülse 19 und der Innenwandung des Zylinders 3 in die Ventilhülse 19 verdrängt. Ein kleinerer Volumenanteil fließt über den Deckel 39 und die Drosselöffnung 41 der Drosselscheibe 43 in die untere Arbeitskammer 31, wobei über den Axialkanal 33 zwischen den Arbeitskammern 29; 31 stets ein Druckausgleich erfolgt. Die bei der Kolbenstangenausfahrbewegung erzeugte Dämpfkraft wird von der Voröffnungsscheibe 23 zwischen dem Boden 21 und der Kolbenstangenführung 13 bestimmt. Das dabei verdrängte Dämpfmedium fließt über den Fluidenweg 56, die zweite Anschlussöffnung 60 und einem Rückschlagventil 62 in den kolbenstangenfernen Arbeitsraum 9. Das Rückschlagventil 62 wird von einem radial elastischen Federring gebildet, der die zweite Anschlussöffnung 60 ansteuert.

Nach einer bestimmten Hublänge der Kolbenstangenführung kommt der Ventilring 27 innenseitig am Boden 21 der Ventilhülse 19 zur Anlage und dichtet den Anschlusskanal 55 zur Anschlussöffnung 53 und den Verbindungskanal 37 ab. Der Axialkanal 35 zwischen der Zylinderwandung und der Ventilhülse wird durch eine Dichtung 61 endseitig verschlossen, so dass das dort befindliche Dämpfmedium nicht weiterfließen kann. Zusätzlich dient die Dichtung 61 auch der axialen Fixierung der Ventilhülse 19 innerhalb des Zylinders 3. Ab dieser Hublage wird die Dämpfkraft von Dämpfventilen, z. B. im Kolben 7, bestimmt. Das Volumen in den Arbeitskammern 29; 31 der Ventilhülse 19 wird bei der Kolbenstangenausfahrbewegung über die Drosselöffnung 41 komprimiert, so dass eine zusätzliche hydraulische Schließkraft auf den Ventilring 27 wirkt.

Am Ende des Hubwegs der Kolbenstange 5 wird ein kolbenstangenseitiger Verdränger 65 in eine gestufte Innenkontur 67 des Adapterrings bewegt, wobei der Verdränger und der Adapterring einen hydraulischen Endanschlag bilden.

Bei einer Kolbenstangeneinfahrbewegung wird der Ventilring 19 aufgrund der Reibkraft zwischen dem Reibring und der Kolbenstange 5 von dem Boden 21 abgehoben und gibt den Anschlusskanal 55 wieder frei. Eine weitere Schließfunktion des Ventilrings 19 ist nicht notwendig. Gleichzeit wird das Dämpfmedium im kolbenstangenfernen Arbeitsraum 9 komprimiert, wodurch das Rückschlagventil 60 vom Druck in Schließrichtung vorgespannt wird, so dass keine Verbindung zum Fluidenweg 56 besteht. Das Dämpfmediumvolumen entsprechend dem verdrängten Volumen der Kolbenstange fließt durch das Bodenventil 14 in den Ausgleichsraum 17. Das restliche Dämpfmediumvolumen wird durch das Kolbenventil in den kolbenstangenseitigen Arbeitsraum verdrängt. Prinzipiell kann man auf das Rückschlagventil 60 verzichten, da das Kolbenstangenvolumen unabhängig davon durch das Bodenventil fließen muss, da der kolbenstangenseitige Arbeitsraum 11 nicht das gesamte Dämpfmediumvolumen des kolbenstangenfernen Arbeitsraums aufnehmen kann. Mit dem Rückschlagventil 60 wird das Dämpfmedium aus dem kolbenstangenfernen Arbeitsraum durch das Kolbenventil gezwungen, wodurch eine größere Dämpfkraft erzeugt wird, die man bei bestimmten Anwendungen erreichen will.

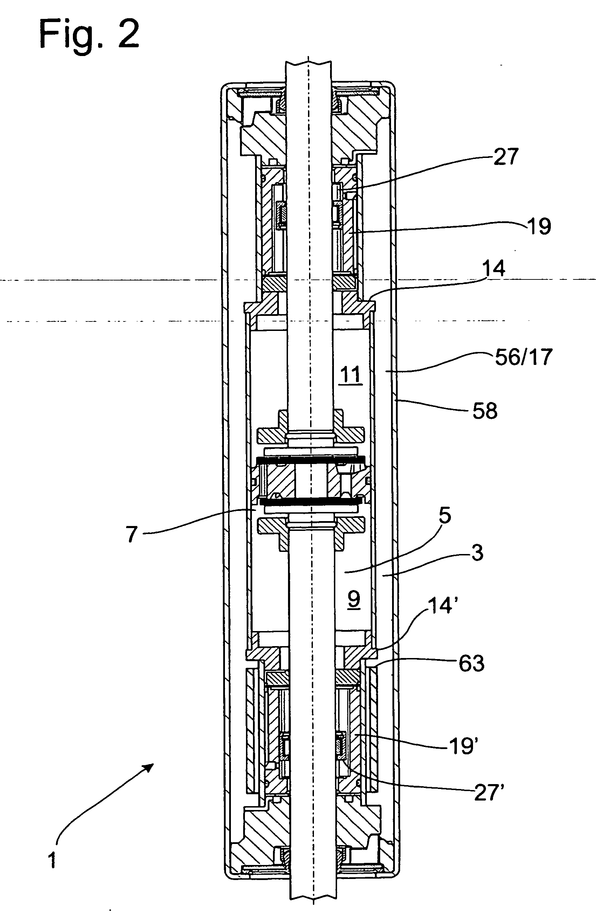

Die Fig. 2 zeigt einen Schwingungsdämpfer 1 mit einer den Zylinder 3 an beiden Enden durchsetzenden Kolbenstange 5, wobei in beiden Arbeitsräumen 9; 11 jeweils eine Ventilhülse 19; 19' mit einem Ventilring 27; 27' angeordnet ist. Bezogen auf den Kolben 7 ist der gesamte Schwingungsdämpfer 1 spiegelbildlich ausführbar, sofern man beide Ventilhülsen 19; 19' mit einer identischen Wirklänge ausführt, um in beide Arbeitsrichtungen der Kolbenstange 5 eine identische amplitudenabhängige Dämpfkraft zu erzeugen. Aufgrund des symmetrischen Aufbaus kommen zwei Adapterringe 14; 14' zur Anwendung. Das Hüllrohr 58 bildet nicht nur den Fluidenweg 56, sondern auch den Ausgleichsraum 17, der mit dem Fluidenweg 56 identisch ist und zusätzlich ein volumenveränderliches Gaspolster 63 aufweist, das vorwiegend thermische Volumenveränderungen des Dämpfmediums kompensieren soll. Im Prinzip funktionieren die Bauteile des Schwingungsdämpfers nach Fig. 2 identisch zu der Ausführung nach Fig. 1. Eine Abweichung besteht darin, dass die Funktion des Rückschlagventils 60; 62 jeweils von den Ventilringen 27; 27' übernommen wird. Wenn ein Ventilring für die eine Bewegungsrichtung öffnet, dann verschließt der andere Ventilring den Fluidenweg 56, sobald der Ventilring am Boden 21 der Ventilhülse anliegt.

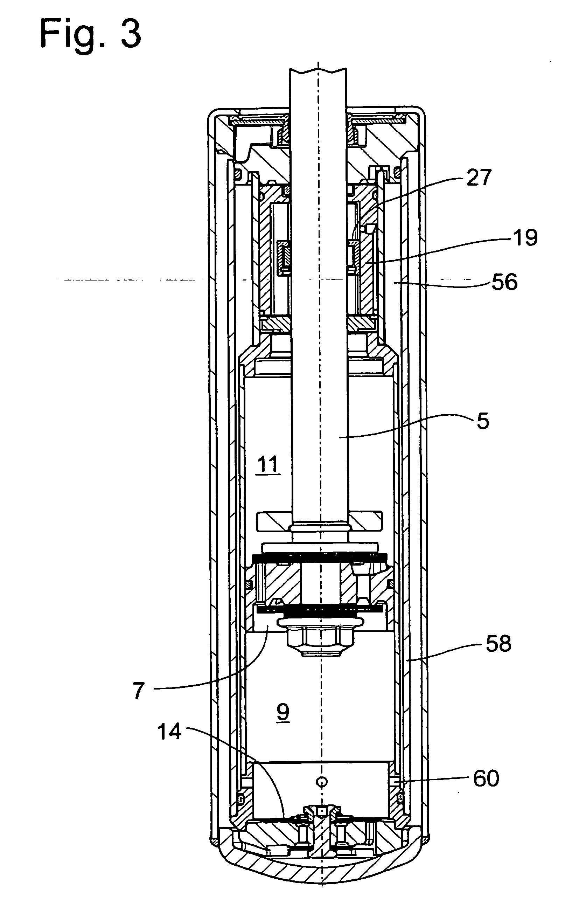

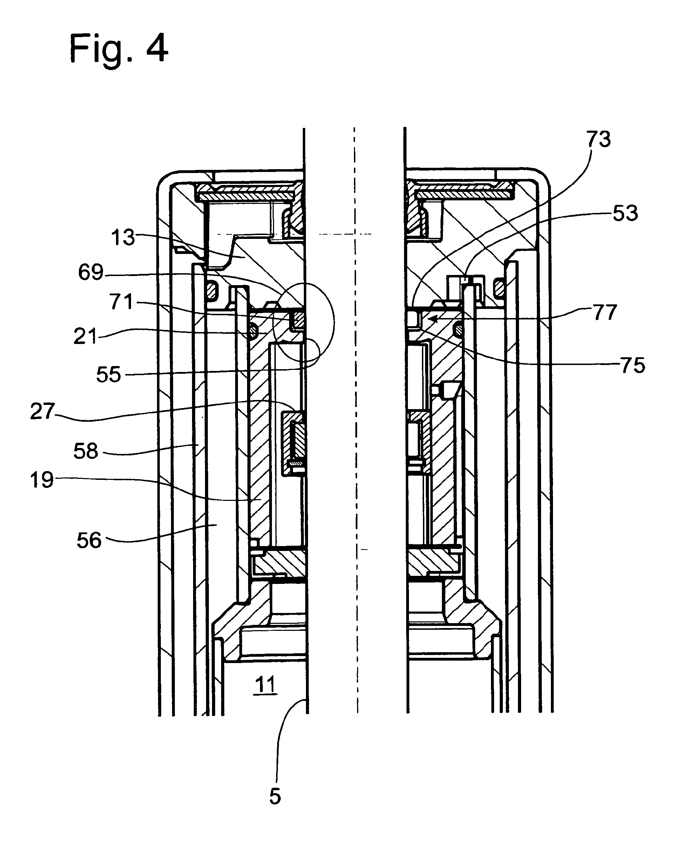

Die Fig. 3 und 4 zeigen einen Schwingungsdämpfer, der auf der Ausführung nach Fig. 1 basiert. Abweichend zur Fig. 1 kommt kein druckgesteuertes Rückschlagventil 60; 62 zur Anwendung, sondern ein reibkraftgesteuertes Rückschlagventil 69, dessen Ventilkörper 71 auf der Kolbenstange 5 gleitend angeordnet ist und zwischen zwei Nutseitenflächen 73; 75 einer Ventilnut 77 eine axiale Betriebsbewegung ausführt, die einzig von der Bewegungsrichtung der Kolbenstange 5 abhängig ist, jedoch nicht vom Hubweg. Das Rückschlagventil 69 ist dem Ventilring 27, der mit dem Boden 21 den Anschlusskanal 55 steuert, in Reihe nachgeordnet. Unabhängig von der Stellung des Ventilrings 27 wird nur dann der Abflusskanal 57 freigegeben, wenn das Rückschlagventil 69 geöffnet ist. Die Ventilnut 77 wird von einer zum kolbenstangenseitigen Arbeitsraum weisenden Stirnfläche der Kolbenstangenführung 13 und eine Ringnut der Ventilhülse 19 gebildet.

Bei einer Kolbenstangenausfahrbewegung liegt der Ventilkörper 71 des Rückschlagventils 69 an der Stirnfläche 73 der Kolbenstange an und gibt den Anschlusskanal 55 frei. Sobald eine Kolbenstangeneinfahrbewegung vorliegt, wird der Ventilkörper 71 durch die Reibkraft der Kolbenstange 5 in Richtung der Ventilhülse 19 bewegt und verschließt den Anschlusskanal 55. Das Dämpfmedium kann durch die zweite Anschlussöffnung 60 und den Fluidenweg 56 zur ersten Anschlussöffnung 53 gelangen und die Schließbewegung durch den Druck im Fluidenweg 56 unterstützen. Danach ist der kolbenstangenferne Arbeitsraum 9 vom kolbenstangenseitigen Arbeitsraum 11 getrennt, so dass das Dämpfmedium aus dem kolbenstangenfernen Arbeitsraum nicht über den Fluidenweg in den kolbenstangenseitigen Arbeitsraum fließen kann, sondern über das Bodenventil 14 und den Kolben 7 entweicht.

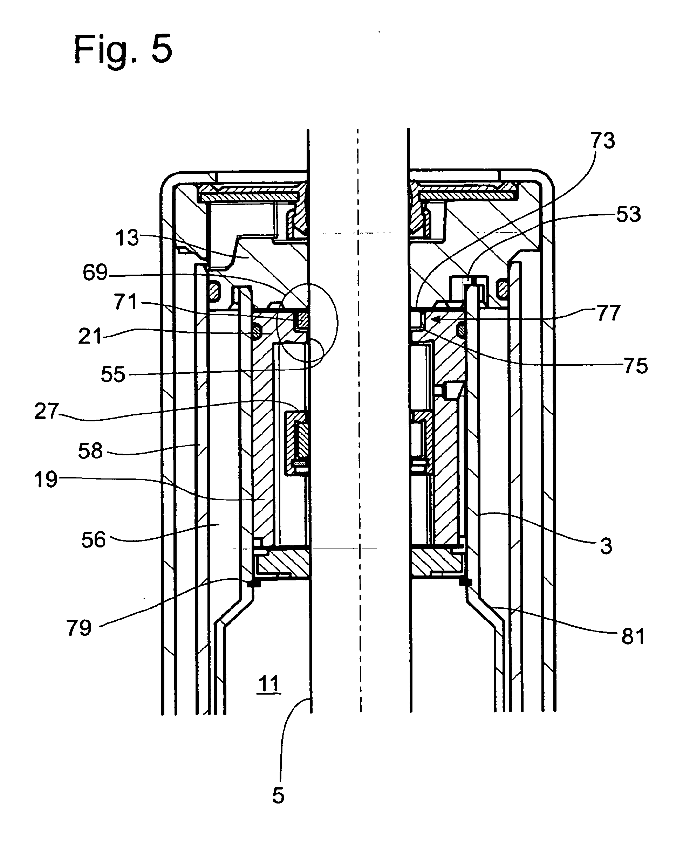

Mit der Fig. 5 soll gezeigt werden, dass das Zylinderrohr auch einteilig mit einem im Durchmesser reduzierten Längenabschnitt ausgeführt sein kann. Es ist keineswegs notwendig, eine mehrteilige Lösung vorzusehen. Zur axialen Sicherung der Ventilhülse 19 kann beispielhaft ein Sicherungsring 79 verwendet werden. Ein Übergang 81 zwischen den Längenabschnitten des Zylinders mit unterschiedlichem Durchmesser kann z. B. konisch ausgeführt sein, um eine möglichst spannungsarme Umformzone zu erreichen. Insgesamt ist die Bauform des Zylinders unabhängig von der Ausgestaltung des Rückschlagventils 62; 69 anzusehen.

## Patentansprüche

1. Schwingungsdämpfer (1) mit amplitudenabhängiger Dämpfkraft, umfassend einen mit Dämpfmedium gefüllten Zylinder (3), in dem eine Kolbenstange (5) mit einem Kolben (7) axial beweglich angeordnet ist, wobei der Kolben (7) den Zylinder (3) in einen kolbenstangenseitigen und einen kolbenstangenfernen Arbeitsraum (9; 11) unterteilt, mit einem Ventilring (27), der auf der Kolbenstange (5) reibkraftbehaftet gleitend gelagert ist und eine Anschlussöffnung (53) zwischen dem kolbenstangenseitigen Arbeitsraum (11) und dem kolbenstangenfernen Arbeitsraum (9) des Schwingungsdämpfers (1) wegabhängig steuert,
**dadurch gekennzeichnet,**
**dass** die Anschlussöffnung (53) mit einem Fluidenweg (56) gekoppelt ist, der beide Arbeitsräume (9; 11) über eine zweite Anschlussöffnung (60) miteinander verbindet.

2. Schwingungsdämpfer nach Anspruch 1,
**dadurch gekennzeichnet,**
**dass** der Fluidenweg (56) von einem den Zylinder (3) zumindest auf einem Längenabschnitt einschließenden Hüllrohr (58) und der Außenmantelfläche des Zylinders (3) gebildet wird.

3. Schwingungsdämpfer nach Anspruch 1,
**dadurch gekennzeichnet,**
**dass** der Fluidenweg (56) mit einem Rückschlagventil (62; 69) bestückt ist.

4. Schwingungsdämpfer nach Anspruch 3,
**dadurch gekennzeichnet,**
**dass** das Rückschlagventil (62; 69) vom Druck im kolbenstangenfernen Arbeitsraum in Schließrichtung vorgespannt wird.

5. Schwingungsdämpfer nach Anspruch 4,
**dadurch gekennzeichnet,**
**dass** das Rückschlagventil (62) von einem radial elastischen Federring gebildet wird, der die Anschlussöffnung (60)ansteuert.

6. Schwingungsdämpfer nach Anspruch 3,
**dadurch gekennzeichnet,**
**dass** das Rückschlagventil (69) von einem auf der Kolbenstange (5) axial verschiebbaren Ventilkörper (71) gebildet wird.

7. Schwingungsdämpfer nach Anspruch 6,
**dadurch gekennzeichnet,**
**dass** der Ventilkörper (71) des Rückschlagventils (69) in einer Nut (77) einer Ventilhülse (19) angeordnet ist, in der der Ventilring (27) axial verschiebbar auf der Kolbenstange (5) gelagert ist.

8. Schwingungsdämpfer nach Anspruch 1,
**dadurch gekennzeichnet,**
**dass** der Zylinder (3) mindestes im Bereich des Hubweges des Ventilrings (27) im Durchmesser verkleinert ist.

9. Schwingungsdämpfer nach Anspruch 8,
**dadurch gekennzeichnet,**
**dass** der Zylinder (3) einteilig und mit mindestens einem Übergang (81) zwischen Längenabschnitten mit unterschiedlichen Durchmessern ausgeführt ist.

10. Schwingungsdämpfer nach Anspruch 8,
**dadurch gekennzeichnet,**
**dass** der Zylinder (3) in Axialrichtung mehrteilig ausgeführt ist und zwischen den Längenabschnitten (3a; 3b) mit unterschiedlichem Durchmesser ein Adapterring (34) angeordnet ist.

11. Schwingungsdämpfer nach Anspruch 9,
**dadurch gekennzeichnet,**
**dass** der Adapterring (34) eine gestufte Innenkontur (67) zur Aufnahme eines kolbenstangenseitigen Verdrängers (65) aufweist und damit einen hydraulischen Endanschlag bildet.

12. Schwingungsdämpfer nach Anspruch 1,
**dadurch gekennzeichnet,**
**dass** der Schwingungsdämpfer (1) eine den Zylinder (3) an beiden Enden durchsetzende Kolbenstange (5) aufweist und in beiden Arbeitsräumen (9; 11) ein auf der Kolbenstange (5) gleitender Ventilring (27; 27') angeordnet ist.

## Claims

1. Vibration damper (1) with amplitude-dependent damping force, comprising a cylinder (3) which is filled with damping medium and in which a piston rod (5) having a piston (7) is arranged axially moveably, the piston (7) subdividing the cylinder (3) into a piston rod-side and a piston rod-remote working space (9; 11), with a valve ring (27) which is mounted on the piston rod (5) slidably under frictional force and which as a function of travel controls a connecting orifice (53) between the piston rod-side working space (9) of the vibration damper (1), **characterized in that** the connecting orifice (53) is coupled to a fluid path (56) which connects the two working spaces (9; 11) to one another via a second connecting orifice (60).

2. Vibration damper according to Claim 1, **characterized in that** the fluid path (56) is formed by a casing tube (58) enclosing the cylinder (3), at least on a portion of length, and by the outer surface area of the cylinder (3).

3. Vibration damper according to Claim 1, **characterized in that** the fluid path (56) is equipped with a non-return valve (62; 69).

4. Vibration damper according to Claim 3, **characterized in that** the non-return valve (62; 69) is prestressed in the closing direction by the pressure in the piston rod-remote working space.

5. Vibration damper according to Claim 4, **characterized in that** the non-return valve (62) is formed by a radially elastic spring ring which activates the connecting orifice (60).

6. Vibration damper according to Claim 3, **characterized in that** the non-return valve (62) is formed by a valve body (71) displaceable axially on the piston rod (5).

7. Vibration damper according to Claim 6, **characterized in that** the valve body (71) of the non-return valve (69) is arranged in a groove (77) of a valve sleeve (19) in which the valve ring (27) is mounted axially displaceably on the piston rod (5).

8. Vibration damper according to Claim 1, **characterized in that** the cylinder (3) is reduced in diameter at least in the region of the stroke travel of the valve ring (27).

9. Vibration damper according to Claim 8, **characterized in that** the cylinder (3) is formed in one part and with at least one transition (81) between portions of length having different diameters.

10. Vibration damper according to Claim 8, **characterized in that** the cylinder (3) is of multi-part form in the axial direction, and an adapter ring (34) is arranged between the portions of length (3a; 3b) having different diameters.

11. Vibration damper according to Claim 9, **characterized in that** the adapter ring (34) has a stepped inner contour (67) for receiving a piston rod-side displacer (65) and therefore forms a hydraulic limit stop.

12. Vibration damper according to Claim 1, **characterized in that** the vibration damper (1) has a piston rod (5) passing through the cylinder (3) at both ends, and a valve ring (27; 27') sliding on the piston rod (5) is arranged in both working spaces (9; 11).

## Revendications

1. Amortisseur d'oscillations (1) doté d'une force d'amortissement dépendant de l'amplitude, comprenant un cylindre (3) rempli d'un fluide d'amortissement, dans lequel une tige de piston (5) est disposée avec un piston (7) de manière déplaçable axialement, le piston (7) divisant le cylindre (3) en un espace de travail (9 ; 11) du côté de la tige de piston et du côté éloigné de la tige de piston, avec une bague de soupape (27), qui est montée de manière glissante et soumise à une force de friction sur la tige de piston (5) et qui commande, en fonction de la course, une ouverture de raccordement (53) entre l'espace de travail (11) du côté de la tige de piston et l'espace de travail (9) de l'amortisseur d'oscillations (1) du côté éloigné de la tige de piston,
**caractérisé en ce que**
l'ouverture de raccordement (53) est accouplée à un chemin de fluide (56) qui relie les deux espaces de travail (9 ; 11) l'un à l'autre par le biais d'une deuxième ouverture de raccordement (60).

2. Amortisseur d'oscillations selon la revendication 1,
**caractérisé en ce que**
le chemin de fluide (56) est formé par un tube de gaine (58) entourant le cylindre (3) au moins sur une portion longitudinale et par la surface d'enveloppe extérieure du cylindre (3).

3. Amortisseur d'oscillations selon la revendication 1,
**caractérisé en ce que**
le chemin de fluide (56) est muni d'un clapet anti-retour (62 ; 69).

4. Amortisseur d'oscillations selon la revendication 3,
**caractérisé en ce que**
le clapet anti-retour (62 ; 69) est précontraint dans la direction de fermeture par la pression dans l'espace de travail du côté éloigné de la tige de piston.

5. Amortisseur d'oscillations selon la revendication 4,
**caractérisé en ce que**
le clapet anti-retour (62) est formé par une bague à ressort radialement élastique qui commande l'ouverture de raccordement (60).

6. Amortisseur d'oscillations selon la revendication 3,
**caractérisé en ce que** le clapet anti-retour (69) est formé par un corps de clapet (71) déplaçable axialement sur la tige de piston (5).

7. Amortisseur d'oscillations selon la revendication 6,
**caractérisé en ce que**
le corps de clapet (71) du clapet anti-retour (69) est disposé dans une rainure (77) d'une douille de soupape (19) dans laquelle la bague de soupape (27) est montée de manière déplaçable axialement sur la tige de piston (5).

8. Amortisseur d'oscillations selon la revendication 1,
**caractérisé en ce que**
le cylindre (3) a un diamètre réduit au moins dans la région de la course de levage de la bague de soupape (27).

9. Amortisseur d'oscillations selon la revendication 8,
**caractérisé en ce que**
le cylindre (3) est réalisé d'une seule pièce et avec au moins une transition (81) entre des portions longitudinales de diamètres différents.

10. Amortisseur d'oscillations selon la revendication 8,
**caractérisé en ce que**
le cylindre (3) est réalisé en plusieurs parties dans la direction axiale et une bague d'adaptateur (34) est disposée entre les portions longitudinales (3a ; 3b) de diamètres différents.

11. Amortisseur d'oscillations selon la revendication 9,
**caractérisé en ce que**
la bague d'adaptateur (34) présente un contour intérieur étagé (67) pour recevoir un corps de déplacement (65) du côté de la tige de piston, et forme avec lui une butée de fin de course hydraulique.

12. Amortisseur d'oscillations selon la revendication 1,
**caractérisé en ce que**
l'amortisseur d'oscillations (1) présente une tige de piston (5) traversant le cylindre (3) aux deux extrémités, et une bague de soupape (27 ; 27') glissant sur la tige de piston (5) est disposée dans les deux espaces de travail (9 ; 11).
